# EUROPEAN PATENT SPECIFICATION

(11) **EP 2 357 565 B1**
(45) Date of publication and mention of the grant of the patent: **17.09.2014**
(21) Application number: 08878136.4
(22) Date of filing: 17.11.2008
(51) Int. Cl.: H04L 12/26

(54) **MONITORING-INHIBITING ERROR MESSAGE SELECTION METHOD AND PROGRAM**
ÜBERWACHUNG SPERRENDES FEHLERNACHRICHTENAUSWAHLVERFAHREN UND PROGRAMM
PROCÉDÉ ET PROGRAMME DE SÉLECTION DE MESSAGE D'ERREUR EMPÊCHANT UNE SURVEILLANCE

(43) Date of publication of application: 17.08.2011
(73) Proprietor: Fujitsu Limited, Kawasaki-shi, Kanagawa 211-8588 (JP)
(72) Inventor: YANASE, Takashi, Kawasaki-shi Kanagawa 211-8588 (JP)
(74) Representative: Keltsch, Ulrike
(86) International application number: PCT/JP2008/070878
(87) International publication number: WO 2010/055590

(56) References cited:
- WO-A1-2008/131473
- JP-A- 2003 030 141
- JP-A- 2004 206 495
- JP-A- 2005 011 053
- US-A1- 2004 221 038
- US-A1- 2006 023 638

## Description

### Technical Field

This technique relates to an information processing technique for identifying error messages to be eliminated from being monitored, from among error messages that are issued from a monitoring target apparatus.

### Background Technology

WO2008131473A1 refers to a wireless broadband network management system comprising a data collection engine to collect data concerning traffic levels through the network base transceiver stations (BTSs), and the BTSs to which particular customer premise equipment (CPE) can connect; and a processor to correlate the data collected; to monitor overall network performance; to aggregate performance of one or more CPEs and BTSs; to detect underperforming BTSs and CPEs; and to automate CPE connections and disconnections to improve network performance in real time.

In a computer operating service work, error messages that are issued from computers that are monitoring target apparatuses are monitored, and when an error message is detected, predetermined measures are taken according to the importance of the detected error message. In the case of an important error message that is related to a fault, suitable measures are taken in advance in order to prevent the fault from occurring, and even in the case of an error message that is not so important, any service is carried out such as notifying the customer of the occurrence of the error.

However, in a customer system in which many error messages occur, a large cost is required in order to deal with those error messages. Therefore, by selecting error messages having a low importance degree and restraining from monitoring such selected error messages (in other words, eliminating the messages from being monitored), it is desired to reduce the total time, or in other words, the cost required for handling the error messages.

However, unless error messages for which monitoring is to be restrained are selected according to a proper reference, the error relating to the error message may cause system faults, and may result in requiring an even longer time to handle the error.

Incidentally, there is a technique that the importance of an error message is known beforehand, and whether or not to monitor an error message is set according to the importance. However, when it is not known whether it is possible to restrain from monitoring a specific error message, it is impossible to conduct such a setting.
Patent Document 1: Japanese Laid-open Patent Publication 2005-276042

### Summary of the Invention

### Problem to be solved by this Invention

As described above, when information for identifying the necessity of monitoring an error message, such as the importance of the error message, has already been known, it is possible to conduct a setting to restrain from monitoring the error message according to that information. However, when the information for identifying the necessity of monitoring an error message is not known in advance, there have been no countermeasures that could be taken, conventionally.

Therefore, an object of this technique is to provide a technique to select error messages for which monitoring is unnecessary in order to reduce the handling time entirely even when the information to identify the necessity of monitoring the error messages is not obtained.

### Means for solving the Problem

This method for selecting error messages to be restrained from being monitored, includes: first identifying, for each of error messages, a first process transition corresponding to a process transition of a case representing that an error message is monitored and no solving measure was taken, from a data storage unit storing, in association with an error message and a case, history data of processes carried out to handle the error message issued by a monitoring target apparatus, to calculate, for each of the error messages, a total sum of periods consumed for the first process transition, as a predicted decrease value of a handling time for a corresponding error message; second identifying, for each of the error messages, a second process transition relating to a process transition of a case representing that an error message was not monitored and a third process transition relating to a process transition of a case representing that an error message was monitored and a solving measure was taken, from the data storage unit, to calculate, for each of the errormessages, a total sum of periods consumed for a process corresponding to a difference between the third process transition and the second process transition, as a predicted increase value of a handling time for a corresponding error message; and comparing, for each of the error messages, the predicted decrease value with the predicted increase value to select an errormessage for which the predicted decrease value is greater than the predicted increase value.

### Brief description of the drawings

FIG. 1 is a system outline diagram;
FIG. 2 is a functional block diagram of an apparatus for selecting error messages to be restrained from monitoring;
FIG. 3 is a diagram depicting an example of data stored in a handling history DB;
FIG. 4 is a diagram depicting a main processing flow in an embodiment of this technique;
FIG. 5 is a diagram depicting a processing flow of an average process time calculation processing;
FIG. 6 is a diagram depicting an example of data stored in an average process time DB;
FIG. 7 is a diagram depicting a processing flow of a processing for generating handling process transitions;
FIG. 8 is a diagram depicting an example of data stored in a handling process transition DB;
FIG. 9 is a diagram depicting a processing flow of the processing for generating the handling process transitions;
FIG. 10 is a diagram depicting a processing flow of a processing for calculating a predicted decrease value of a handling time;
FIG. 11 is a diagram depicting a processing of a processing for calculating the predicted decrease value of the handling time;
FIG. 12 is a diagram depicting an example of data stored in a predicted increase and decrease DB;
FIG. 13 is a diagram depicting a processing flow of a processing for extracting an added process of a case "not monitored";
FIG. 14 is a diagram depicting a processing flow of a processing for generating a normal handling process transition;
FIG. 15 is a diagram depicting an example of bigrams of the process transitions for the case "not monitored";
FIG. 16 is a diagram depicting an example of bigrams of the process transitions for cases "measure taken";
FIG. 17 is a diagram depicting a processing flow of a processing for extracting added processes for the case "not monitored";
FIG. 18 is a diagram depicting a processing flow of a processing for calculating a predicted increase value of the handling time;
FIG. 19 is a diagram depicting a processing flow of a processing for selecting messages to be restrained from being monitored;
FIG. 20 is a diagram depicting a processing flow of a processing for selecting messages to be restrained from being monitored;
FIG. 21 is a diagram depicting an example of a selection confirmation screen for messages to be restrained from being monitored; and
FIG. 22 is a functional block diagram of a computer.

### Best mode for carrying out the invention

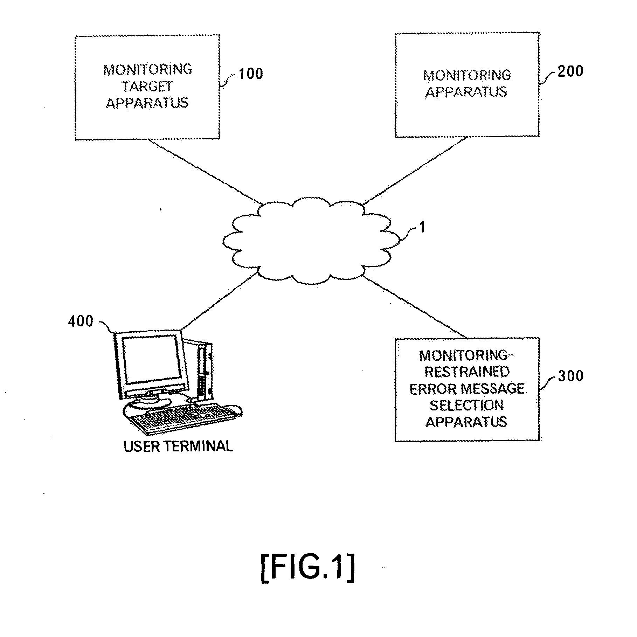

FIG. 1 depicts an overview of a system relating to one embodiment of this technique. For example, a monitoring target apparatus 100, which is a customer's computer system, is connected via a network 1 to amonitoring apparatus 200 that responds to error messages that are issued from the monitoring target apparatus 100 and carries out a predetermined notification for a predetermined destination. However, the functions of the monitoring apparatus 200 may be integrated with the monitoring target apparatus 100 in some cases. Moreover, it is assumed that log data concerning measures or the like that are taken for the error message is stored in the monitoring apparatus 200 or monitoring target apparatus 100. Furthermore, a monitoring-restrained error message selection apparatus 300, which carries out a main processing in this embodiment, and a user terminal 400, which the user, who is an administrator, operates in order to cause the monitoring-restrained error message selection apparatus 300 to carry out a processing, are also connected to the network 1. The monitoring target apparatus 100 is not limited to one, and the monitoring target apparatuses 100 may be plural systems for a single customer, or may be systems for plural customers. The number of monitoring apparatuses 200 is also not limited.

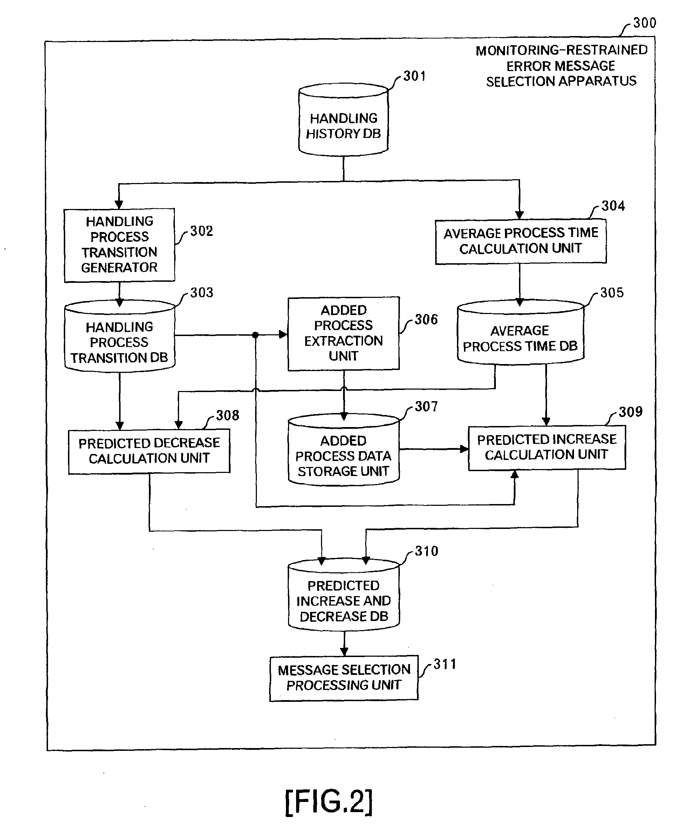

FIG. 2 depicts a function block diagram of a monitoring-restrained error message selection apparatus 300. The monitoring-restrained error message selection apparatus 300 has a handling history DB 301, a handling process transition generator 302, a handling process transition DB 303, an average process time calculation unit 304, an average process time DB 305, an added process extraction unit 306, an added process data storage unit 307, a predicted decrease calculation unit 308, a predicted increase calculation unit 309, a predicted increase and decrease DB 310 and a message selection processing unit 311.

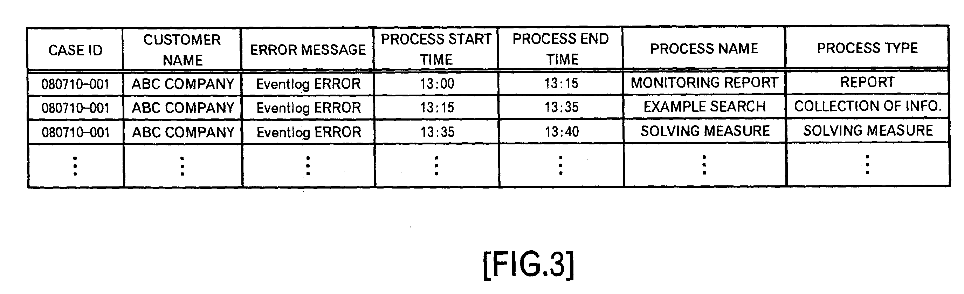

The handling history DB 301 stores data such as illustrated in FIG. 3. In the example in FIG. 3, a case ID, customer name, error message, process start time, process end time, process name and process type are registered. A process represents the name of handling that is carried out for an error message, and includes a process that is carried out by a customer, a process that is carried out by a system engineer, a process that is carried out by a monitoring apparatus 200 and the like. The case ID, customer name and error message among these data items are inputted by a person such as a system engineer that is in charge of the case. The process start time, process end time and process name are extracted from the log data that is stored in the monitoring target apparatus 100 or monitoring apparatus 200, however may also be inputted by the system engineer in charge of the case. Furthermore, here, the process type can be "report", "information gathering" or "solving measure", and is automatically identified by the process name. Incidentally, a process for collecting such kinds of data is not a main part of this embodiment and can be realized by any conventional technique. Therefore, the details will not be described any further here.

The handling process transition generator 302 uses data that is stored in the handling history DB 301 to carry out a processing as will be described below, and stores the processing results into the handling process transition DB 303. In addition, the average process time calculation unit 304 uses data stored in the handling history DB 301 to carry out a processing as will be described below, and stores the processing results into the average process time DB 305. The added process extraction unit 306 uses data stored in the handling process transition DB 303 to carry out a processing as will be described below, and stores the processing results into the added process data storage unit 307. The predicted decrease calculation unit 308 uses data stored in the handling process transition DB 303 and average process time DB 305 to carry out a processing as described below, and stores the processing results into the predicted increase and decrease DB 310. The predicted increase calculation unit 309 uses data stored in the handling process transition DB 303, added process data storage unit 307 and average process time DB 305 to carry out a processing as described below, and stores the processing results into the predicted increase and decrease DB 310. The message selection processing unit 311 uses data stored in the predicted increase and decrease DB 310 to carry out a processing as described below, and carry out a processing such as transmitting the processing results to the user terminal 400, for example, or carrying out settings for the monitoring apparatus 200.

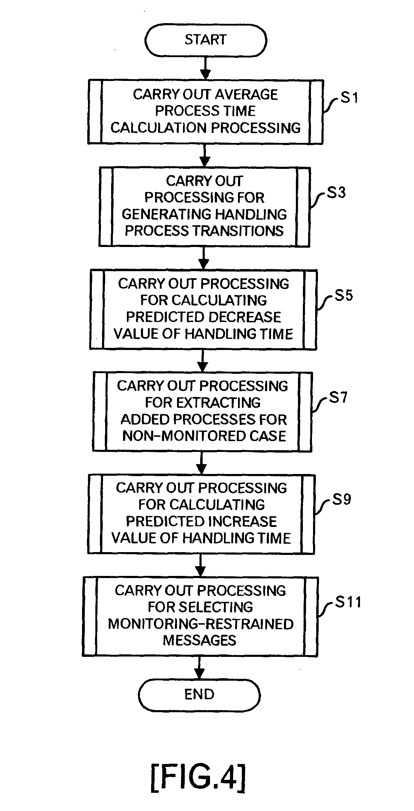

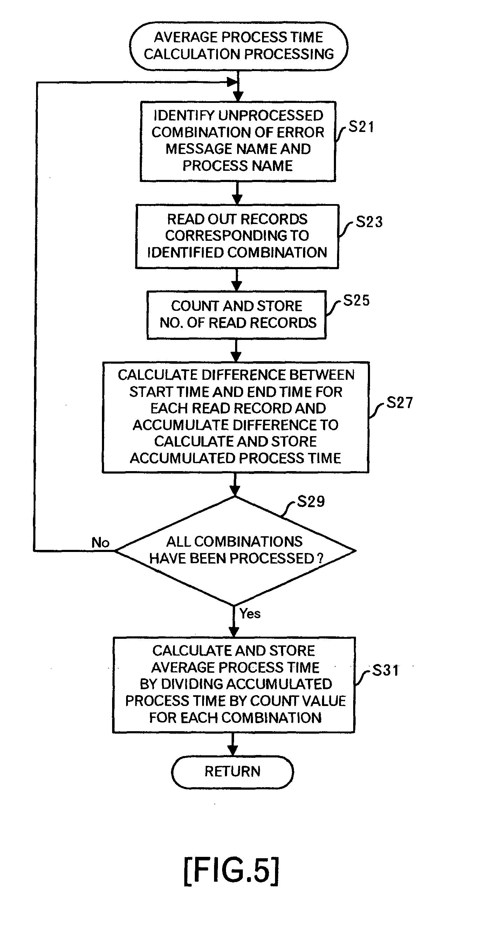

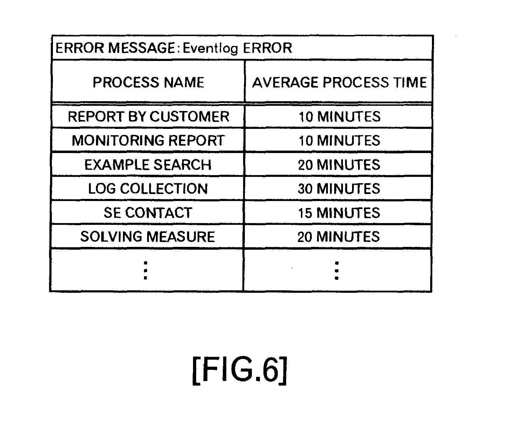

Next, the processing contents carried out by the monitoring-restrained error message selection apparatus 300 illustrated in FIG. 2 will be explained using FIG. 4 to FIG. 21. First, the average process time calculation unit 304 uses data stored in the handling history DB 301 to carry out an average process time calculation processing (FIG. 4: step S1). The average process time calculation processing will be explained using FIG. 5 and FIG. 6.

The average process time calculation unit 304 identifies one unprocessed combination of an error message name and process name in the handling history DB 301 (step S21). Then, the average process time calculation unit 304 reads out all of the records corresponding to the identified combination from the handling history DB 301 (step S23). Furthermore, the average process time calculation unit 304 counts the number of records that were read out, stores the counted number in association with the identified combination into a storage device such as a main memory (step S25). The average process time calculation unit 304 then calculates the difference between the process start time and process end time for each read record, calculates an accumulated process time by accumulating the differences, stores the accumulated process time in association wi th the identified combination into the storage device such as the main memory (step S27).

Here, the average process time calculation unit 304 determines whether or not all combinations of the error message name and process name have been processed (step S29). When there is an unprocessed combination, the processing returns to the step S21. However, when all combinations have been processed, the average process time calculation unit 304 calculates an average process time for each error message and each process by dividing the accumulated process time by the count value for each combination, and stores the average process time in association with the error message and process into the average process time DB 305 (step S31). Then, the processing returns to the calling source processing.

FIG. 6 illustrates an example of data that is stored in the average process time DB 305. The table in FIG. 6 is a table for an error message called "Eventlog error", for example, and the average process time is registered for each process that is carried out for that error message.

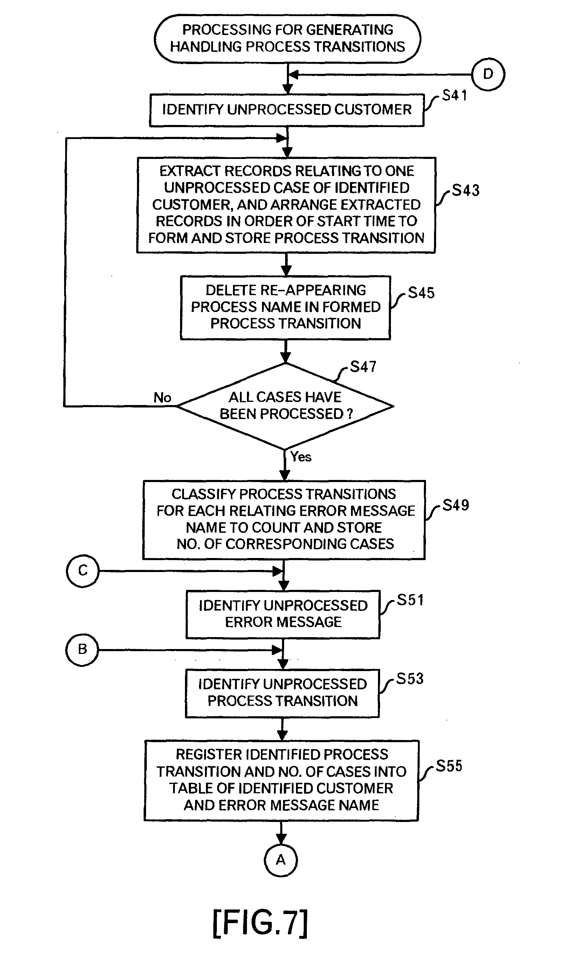

Returning to the explanation of the processing flow in FIG. 4, next, the handling process transition generator 302 uses data that is stored in the handling history DB 301 to carry out a processing for generating handling process transitions (step S3). This processing for generating handling process transitions will be explained using FIG. 7 to FIG. 9.

The handling process transition generator 302 identifies one unprocessed customer in the handling history DB 301 (step S41). Then, the handling process transition generator 302 extracts the records relating to one unprocessed case for the identified customer from the handling history DB 301, arranges the processes in order of process start time to form a process transition, and then stores data of the generated process transition into the storage device such as the main memory (step S43). However, when the same process name appears again in the formedprocess transition, the handling process transition generator 302 deletes the process name of the re-appearing process from the process transition (step S45). Depending on the case, a rework in the process may occur, however, the rework will not be taken into consideration here. However, this processing is arbitrary. Incidentally, the handling process transition is an arrangement of processes that are arranged in the time series from the process, which was firstly performed, to the process, which was lastly performed.

After that, the handling process transition generator 302 determines whether or not all of the cases for the identified customer have been processed in the handling history DB 301 (step S47). When there is an unprocessed case, the processing returns to the step S43. On the other hand, when all of the cases for the identified customer have been processed, the handling process transition generator 302 classifies the formed process transitions for each relating error message name to count the number of corresponding cases for each relating error message name, and stores the count value in association with the error message name and process transition into the storage device such as the main memory (step S49).

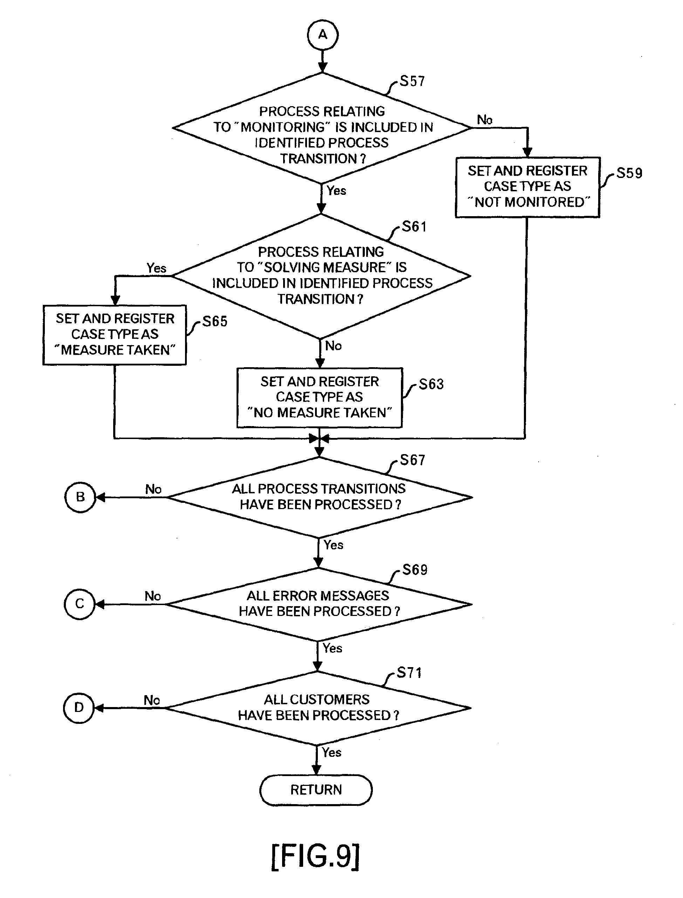

Here, the handling process transition generator 302 identifies one unprocessed errormessage name (step S51), and further identifies one unprocessed process transition (step S53). The handling process transition generator 302 then registers the identified process transition and count value of the number of corresponding cases into a table for the identified customer and error message name into the handling process transition DB 303 (step S55). The processing then moves to the processing in FIG. 9 via a terminal A.

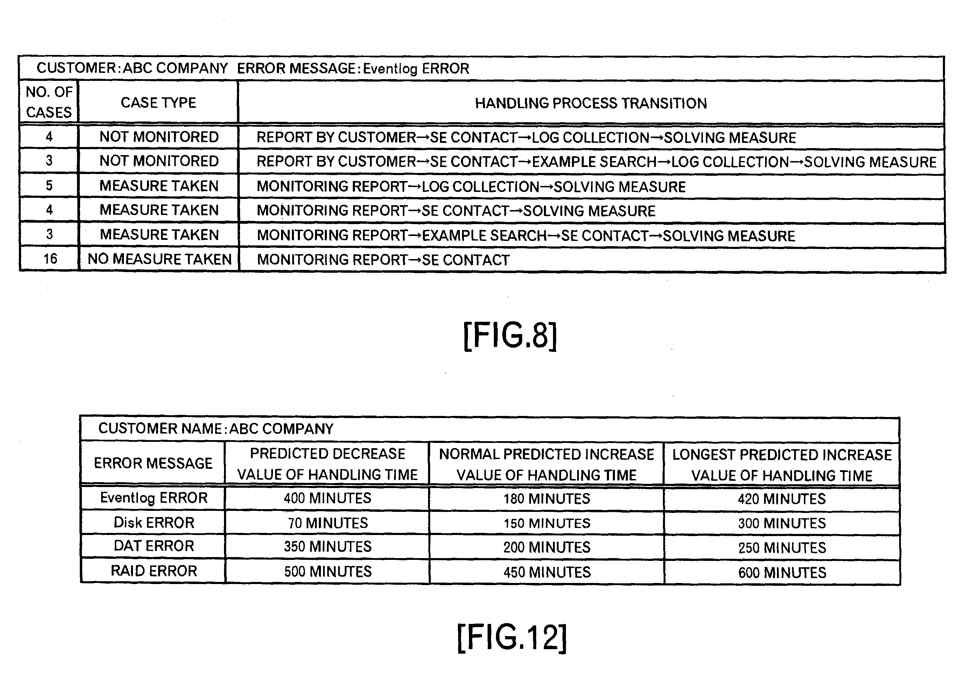

For example, a table as illustrated in FIG. 8 is stored in the handling process transition DB 303. The table in FIG. 8 is a table for an error message "Eventlog error" for a customer ABC company, in which the number of cases, case type and handling process transition are registered. At the step S55, the case type is not yet registered.

Moving to explanation of the processing in FIG. 9, the handling process transition generator 302 determines whether or not a process relating to "monitoring" is included in the identified process transition (step S57). In the example in FIG. 8, the handling process transition generator 302 determines whether or not a process called "monitoring report" is included. For example, when the identified process transition is a process transition such as on the first line and second line in FIG. 8, "monitoring report" is not included. Therefore, a negative judgment is made at the step S57.

Here, when there is no process relating to "monitoring" included in the identified process transition, the handling process transition generator 302 registers the case type as "not monitored" in the corresponding record in the handling process transition DB 303 (step S59). The processing then moves to the step S67. On the other hand, when there is a process relating to "monitoring" in the identified process transition, the handling process transition generator 302 determines whether or not "solving measure" is included in the identified process transition (step S61). In other words, the handling process transition generator 302 determines whether or not any data representing a measure for solving any problem was taken is recorded. For example, in the case of process transitions such as on the third to fifth lines in FIG. 8, it is determined that the "solving measure" is included, and in the case of a process transition such as on the sixth line, it is determined that the "solving measure" is not included.

When the "solving measure" is included in the identified process transition, the handling process transition generator 302 registers the case type as "measure taken" in the corresponding record in the handling process transition DB 303 (step S65). The processing then moves to the step S67.

On the other hand, when "solving measure" is not included in the identified process transition, the handling process transition generator 302 registers the case type as "no measure taken" in the corresponding record of the handling process transition DB 303 (step S63). The processing then moves to the step S67.

After that, the handling process transition generator 302 determines whether or not all process transitions have been processed for the identified error message name of the identified customer (step S67). When there is an unprocessed process transition, the processing returns to the step S53 in FIG. 7 via a terminal B. On the other hand, when there is no unprocessed process transition, the handling process transition generator 302 determines whether or not all error message names have been processed for the identified customer (step S69). When there is an unprocessed error message name, the processing returns to the step S51 in FIG. 7 via a terminal C. On the other hand, when there is no unprocessed error message name, the handling process transition generator 302 determines whether or not all customers have been processed (step S71). When there is an unprocessed customer, the processing returns to the step S41 in FIG. 7 via a terminal D. However, when the processing has been carried out for all customers, the processing returns to the calling-source processing.

By carrying out such a processing, it is possible to identify the process transitions actually performed and the number of cases thereof for each customer and each error message. By carrying out the aforementioned processing, the pre-processing of this embodiment is completed. Incidentally, as for the data stored in the handling process transition DB 303, the data may be separately prepared and registered into the handling process transition DB 303. Also, as for the data stored in the average process time DB 305, the data may be separately prepared and registered in the average process time DB 305.

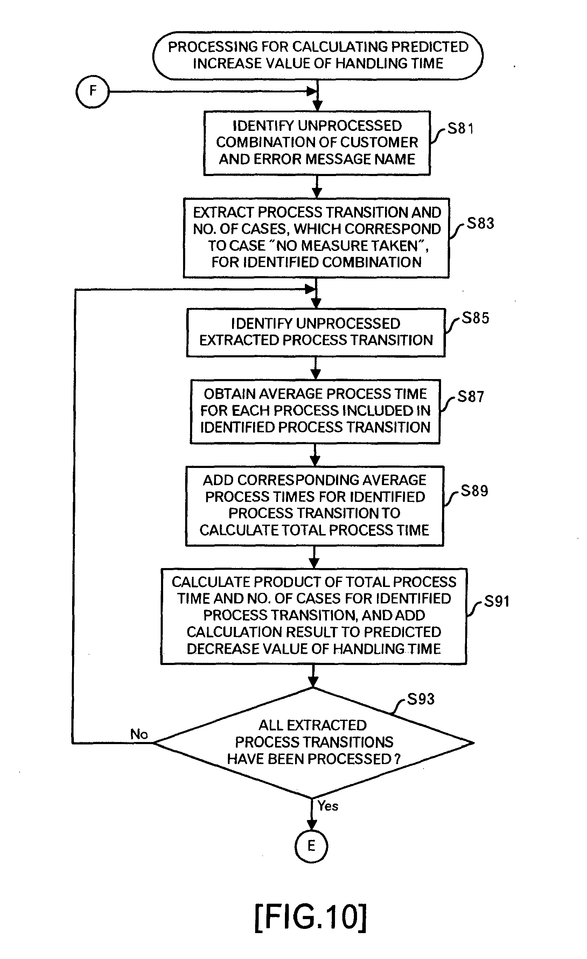

Returning to the explanation of the processing in FIG. 4, the predicted decrease calculation unit 308 uses data stored in the handling process transition DB 303 and average process time DB 305 to carry out a processing for calculating the predicted decrease value of the handling time (step S5). The processing for calculating the predicted decrease value of the handling time will be explained using FIG. 10 to FIG. 12.

The predicted decrease calculation unit 308 identifies one unprocessed combination of a customer and errormessage name in the handling process transition DB 303 (step S81). Then, the predicted decrease calculation unit 308 extracts the process transitions and the number of cases, which correspond to "no measure taken", for the identified combination (step S83). In the example in FIG. 8, the data on the 6th line is read out.

In this embodiment, a case representing "no measure taken" expresses that the error message is being monitored, however, even when there is a report of the monitoring results, no solving measure is taken, and if the error message is designated to not be monitored, the case "no measure taken" no longer occurs. In other words, by designating the error message not being monitored, it is considered that it is possible to reduce the time for the case "no measure taken". Therefore, in the processing for calculating the predicted decrease value of the handling time, the time that is expected to be reduced is predicted, based on the case "no measure taken".

The predicted decrease calculation unit 308 identifies one unprocessed process transition of the extracted process transitions (step S85). The predicted decrease calculation unit 308 then acquires the average process time for each process included in the identified process transition from the average process time DB 305 (step S87). In the case of the data on the 6th line of FIG. 8, 10 minutes for the "monitoring report" and 15 minutes for "SE contact" are acquired. Furthermore, as for the identified process transition, the predicted decrease calculation unit 308 calculates the total process time by adding the obtained average process times, and stores the calculation result into the storage device such as the main memory (step S89). Here, 25 (= 10 + 15) minutes is calculated as the total process time.

Moreover, the predicted decrease calculation unit 308 calculates, for the identified process transition, the product of the total process time and the number of cases, and adds the calculation result to the predicted decrease value of the handling time for the identified combination (step S91). In the case of the data on the 6th line in FIG. 8, because there are 16 cases, 400 (= 25 minutes * 16) minutes is calculated.

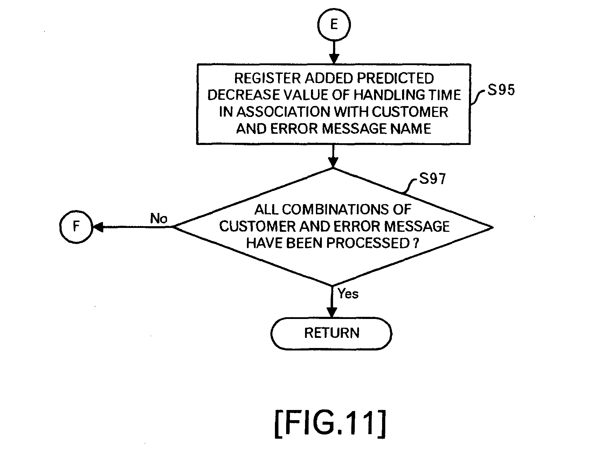

After that, the predicted decrease calculation unit 308 determines for the identified combination whether or not all of the extracted process transitions have been processed (step S93). When there is an unprocessed extracted process transition, the processing returns to the step S85. On the other hand, when there is no unprocessed extracted process transition, the processing moves to a processing in FIG. 11 via a terminal E.

Moving to explanation of the processing in FIG. 11, the predicted decrease calculation unit 308 stores the predicted decrease value of the handling time, which was added at the step S91, in association with the combination of the customer and error message name, into the predicted increase and decrease DB 310 (step S95). For example, FIG. 12 illustrates an example of data stored in the predicted increase and decrease DB 310. FIG. 12 represents a table for the customer "ABC company", and in this table, the predicted decrease value of the handling time, the normal predicted increase value of the handling time, and the longest predicted increase value of the handling time are registered for each error message. At the step S95, the predicted decrease value of the handling time is registered.

The predicted decrease calculation unit 308 then determines whether or not all combinations of the customer and error message name have been processed (step S97). When there is an unprocessed combination, the processing returns to the step S81 in FIG. 10 via a terminal F. However, when there is no unprocessed combination, the processing returns to the calling-source processing.

By carrying out the processing such as described above, it is possible to calculate, for each error message, the total amount of the work time that may be reduced when the monitoring is not carried out, as the predicted decrease value.

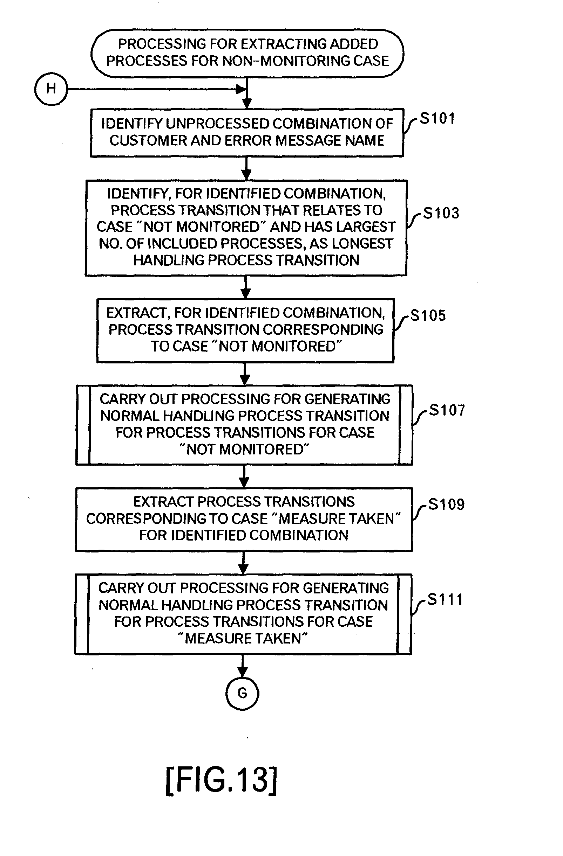

Returning to the explanation of the processing in FIG. 4, the added process extraction unit 306 uses data stored in the handling process transition DB 303 to carry out a processing for extracting an added process for non-monitored case (step S7). The processing for extracting an added process for non-monitored case will be explained using FIG. 13 to FIG. 17.

The added process extraction unit 306 identifies one unprocessed combination of the customer and error message name in the handling process transition DB 303 (step S101). Then, as for the identified combination, the added process extraction unit 306 identifies the process transition that relates to the case "no measure taken" and that has the largest number of processes, as a longest handling process transition, and stores data of the longest process transition into the storage device such as the main memory (step S103). In the example in FIG. 8, the process transition on the second line has the largest number of processes among the process transitions on the first and second lines. Therefore, the process transition on the second line is selected. However, the process transition having the longest total time may be identified from the average process times that are stored in the average process time DB 305. The process transition that is identifiedhere is used for identifying added processes in the longest transition in the case "no measure taken".

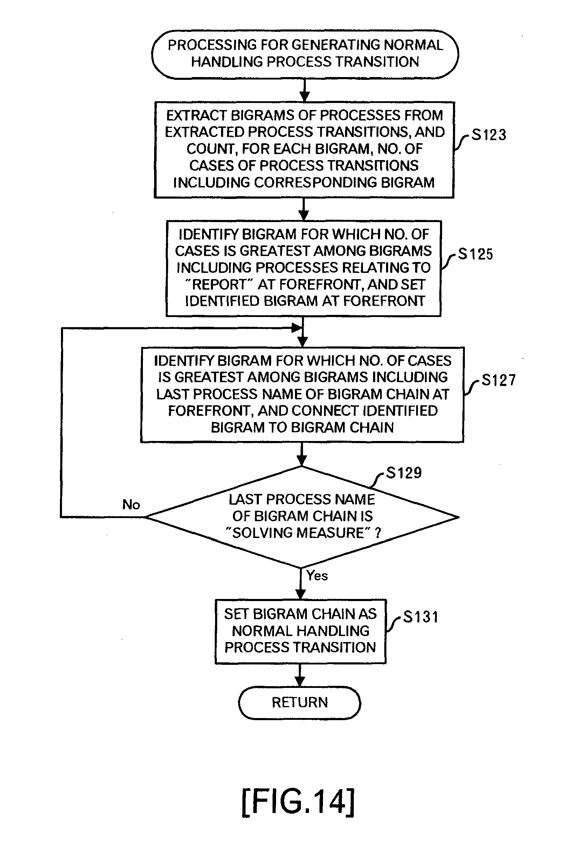

Next, the added process extraction unit 306 extracts all of the process transitions that correspond to the case "not monitored", for the identified combination, in the handling process transition DB 303, and stores data of the extracted process transitions into the storage device such as the main memory (step S105). In the example in FIG. 8, the process transitions on the first and second lines are extracted. The added process extraction unit 306 then carries out a processing for generating the normal handling process transition for the process transitions that correspond to the cases "not monitored" (step S107). The processing for generating the normal handling process transition is explained using FIG. 14.

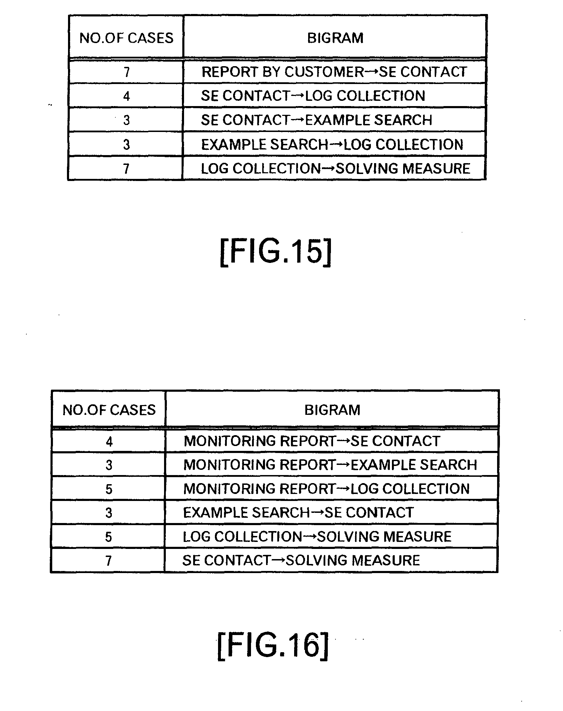

The added process extraction unit 306 extracts bigrams of the processes from the extracted process transitions, counts the number of cases of the process transitions that includes the bigrams, and stores the results into the storage device such as the main memory (step S123). In FIG. 8, the process transitions on the first and second lines are broken down into chains including two processes. In other words, in the example of the process transition on the first line, the process transition is broken down to the bigram from report by customer to SE contact, the bigram from SE contact to log collection, and the bigram from log collection to solving measure. The process transition on the second line is similarly broken down. As a result, data such as illustrated in FIG. 15 is obtained. The number of cases is the total number of cases of the process transitions that include the corresponding bigram. Therefore, in the case of the bigram from the report by customer to the SE contact, there are four cases for the process transition on the first line and three cases for the process transition on the second line. Then, the total number of cases is "7".

Next, the added process extraction unit 306 identifies the bigram for which the number of cases is greatest among the bigrams that include a process relating to "report" at the forefront, and sets the identified bigram at the fore front of the bigram chain (step S125). For example, in the case "not monitored", the added process extraction unit 306 identifies the process "report by customer". In the case "measure taken", which will be described later, the added process extraction unit 306 identifies the process "monitoring report". In the example in FIG. 15, the bigram from the report by customer to the SE contact is identified and set at the forefront of the bigram chain.

The added process extraction unit 306 then identifies the bigram for which the number of cases is greatest from among the bigrams that include the last process name in the current forming bigram chain at the forefront, and connects the identified bigram to the bigram chain (step S127). Because the bigram from the report by customer to the SE contact has already been selected, the bigram from the SE contact to the log collection, for which the number of cases is greatest, is selected from among the bigram from the SE contact to the log collection and bigram from the SE contact to the example search, which are bigrams that include the SE contact at the forefront. A bigram chain is then formed in the order of the customer report, SE contact and log collection.

After that, the added process extraction unit 306 determines whether or not the last process name in the current forming bigram chain is the "solving measure" (step S129). When the last process name in the bigram chain is not the "solving measure", there is still a bigram to be connected. Therefore, the processing returns to the step S127. In the example in FIG. 15, the bigram that can be connected to the last process name "log collection" is the bigram from the log collection to the solving measure. Therefore, by connecting this bigram, the process transition "report by customer" -> "SE contact" -> "log collection" -> "solving measure" is formed.

When the last process name of the forming bigram chain is "solving measure", the added process extraction unit 306 sets the current bigram chain as the normal handling process transition (step S131). In the case of the processing in FIG. 15, the normal handling process transition for the case "not monitored" is obtained. The processing then returns to the processing in FIG. 13.

In this way, bigrams having a high possibility of the occurrence are connected to forma typical process transition, and the formed process transition is used in the following processing as the normal handling process transition.

Returning to the processing in FIG. 13, the added process extraction unit 306 extracts, for the identified combination, process transitions that correspond to the case "measure taken" from the handling process transition DB 303 (step S109). In the example in FIG. 8, the process transitions on the third to fifth lines are extracted. The added process extraction unit 306 then carries out the processing for generating the normal handling process transition for the extracted process transitions that correspond to the case "measure taken" (step S111). The added process extraction unit 306 performs the processing such as illustrated in FIG. 14 for the process transitions that were extracted as the case "measure taken". As a result, the bigrams such as illustrated in FIG. 16 are extracted. Then, at the step S125, from among the bigram from the monitoring report to the SE contact, the bigram from the monitoring report to the example search and the bigram from the monitoring report to the log collection, the bigram from the monitoring report to the log collection, which has the largest number of cases, is selected as the forefront bigram. Next, because there is only one bigram having the log collection as the forefront, the bigram from the log collection to the solving measure is connected to the forefront bigram. By doing so, the last process name is "solving measure", so a process transition "monitoring report" -> "log collection" -> "solving measure" is set as the normal handling process transition for the case "measure taken".

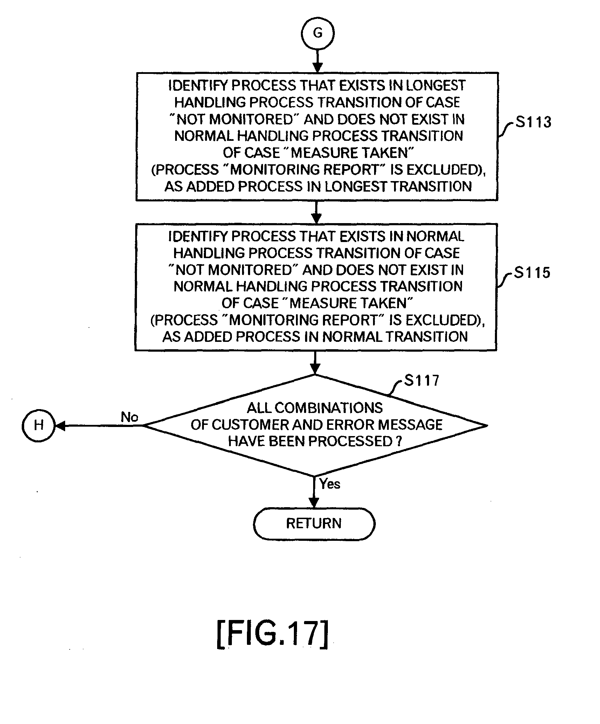

The processing then moves to the processing in FIG. 17 via a terminal G, and the added process extraction unit 306 identifies processes that exist in the longest handling process transition for the case "not monitored", but that do not exist in the normal handling process transition for the case "measure taken" (however, the process that corresponds to "monitoring report" is excluded) as the addedprocesses in the longest transition, and stores data of the identified process in association with the customer and error message name, into the added process data storage unit 307 (step S113). In the example above, the process "SE contact" and the process "example search" are identified. As a result, when a certain error message is not monitored, extra processes that are needed when compared to the normal handling process transition carried out when monitored are identified. Especially, at the step S113, the extra processes that are necessary for the process transition that becomes longest when an error message is not monitored are identified as the added processes in the longest transition.

Moreover, the added process extraction unit 306 identifies the processes that exist in the normal handling process transition for the case "not monitored" and do not exist in the normal handling process transition for the case "measure taken" (however, processes that correspond to "monitoring report" is excluded) as the added processes in the normal transition, and stores the identified processes in association with the combination of the customer and error message name into the added process data storage unit 307 (step S115). In the example above, only the process "SE contact" is extracted. By carrying out such a processing, when a certain error message is not monitored, the extra processes that are necessary when compared to the normal handling process transition when the error message is monitored, are identified.

The added process extraction unit 306 then determines whether or not all combinations of the customer and error message name have been processed (step S117). When there is an unprocessed combination, the processing returns to the step S101 in FIG. 13 via a terminal H. On the other hand, when all combinations have been processed, the processing returns to the calling-source processing.

By carrying out such a processing, it is possible to identify, for each of the aforementioned two patterns, extra processes that are necessary when an error message is not monitored.

As for the normal handling process transition, instead of the processing described above, a process transition of the case that occurs the most often may be adopted, or by calculating the average time of the corresponding process transitions, the process transition that is closest to the calculated average time may be adopted.

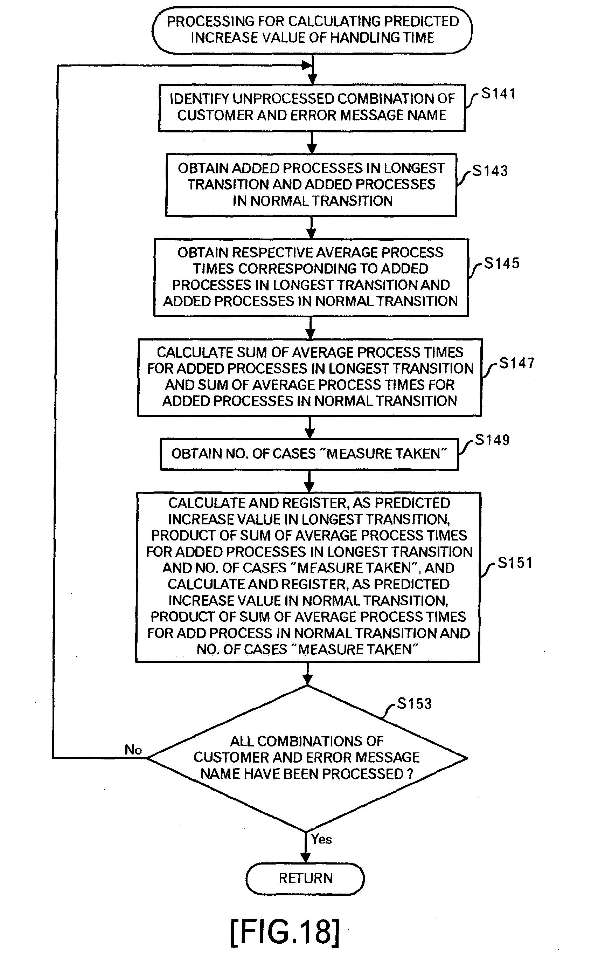

Returning to the processing in FIG. 4, next, the predicted increase calculation unit 309 uses data stored in the added process data storage unit 307 and average process time DB 305 to carry out a processing for calculating a predicted increase value of the handling time (step S9). This processing for calculating the predicted increase of the handling time is explained using FIG. 18.

First, the predicted increase calculation unit 309 identifies an unprocessed combination of the customer and error message name in the added process data storage unit 307 (step S141). Moreover, the predicted increase calculation unit 309 reads out the added processes in the longest transition and the added processes in the normal transition, for the identified combination, from the added process data storage unit 307 (step S143). Then, the predicted increase calculation unit 309 reads out the respective average process times corresponding to the addedprocesses in the longest transition and added processes in the normal transition, from the average process time DB 305 (step S145).

After that, the predicted increase calculation unit 309 calculates the sum of the average process times for the added processes in the longest transition, and the sum of the average process times for the added processes in the normal transition (step S147). The sum of the average process times for the added processes in the longest transition, in the example above, is 35 (= 15 + 20) minutes, and the sum of the average process times for the added processes in the normal transition, in the example above, is 15 minutes.

Then, the predicted increase calculation unit 309 extracts the number of cases "measure taken", for the identified combination, from the handling process transition DB 303 (step S149). In the example in FIG. 8, there are the total 12 cases "measure taken", in the third to the fifth records. This number of cases may be counted at the step S109 and stored in the added process data storage unit 307.

After that, the predicted increase calculation unit 309 calculates the product of the sum of the average process times for the added processes in the longest transition and the number of cases "measure taken" as the predicted increase value in the longest transition, and calculates the product of the sum of the average process times for the added processes in the normal transition and the number of cases "measure taken" as the predicted increase value in the normal transition, and stores the calculated values in association with the identified combination into the predicted increase and decrease DB 310 (step S151). The predicted increase value in the longest transition is 420 (= 35 * 12) minutes, and the predicted increase value in the normal transition is 180 (= 15 * 12) minutes. By carrying out such a processing, the data for the first record in FIG. 12 is complete.

Furthermore, the predicted increase calculation unit 309 determines whether or not all combinations of the customer and error message name have been processed (step S153). When there is an unprocessed combination, the processing returns to the step S141. However, where there is no unprocessed combination, the processing returns to the calling-source processing.

In this way, the extra handling time that is necessary when an error message is not monitored is obtained as the predicted increase value of the handling time for each of the normal transition and longest transition.

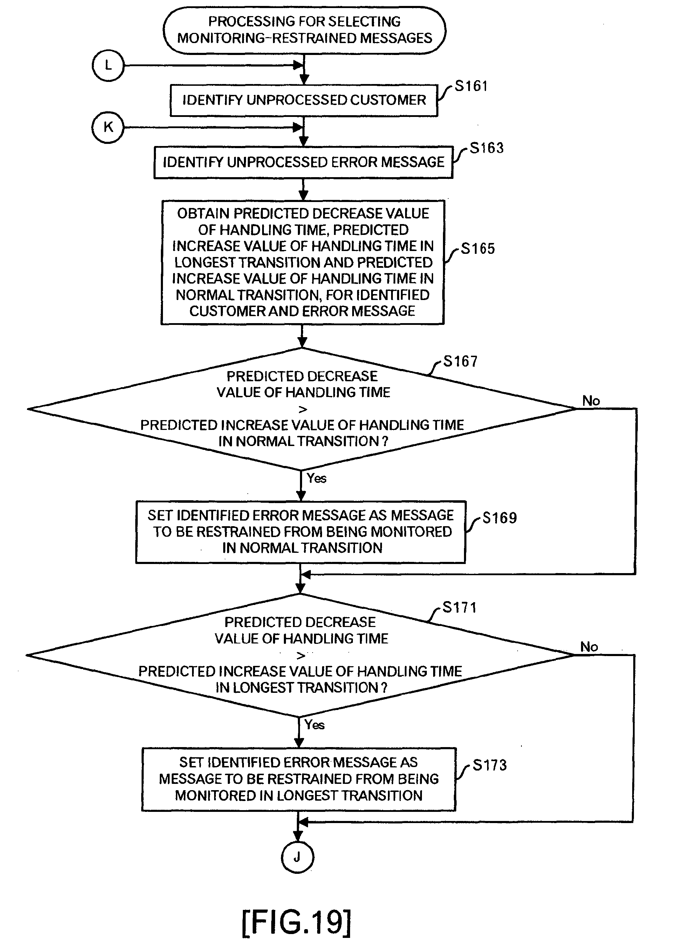

Returning to the explanation of the processing in FIG. 4, the message selection processing unit 311 uses data stored in the predicted increase and decrease DB 310 to carry out a processing for selecting monitoring-restrained messages (step S11). The processing for selecting monitoring-restrained messages will be explained using FIG. 19 to FIG. 21.

The message selection processing unit 311 identifies one unprocessed customer in the predicted increase and decrease DB 310 (step S161). In addition, the message selection processing unit 311 identifies one unprocessed error message for the identified customer (step S163). Then, the message selection processing unit 311 reads out the predicted decrease value of the handling time, the predicted increase value of the handling time in the longest transition and the predicted increase value of the handling time in the normal transition for the identified customer and error message from the predicted increase and decrease DB 310 (step S165).

The message selection processing unit 311 then determines whether or not the predicted decrease value of the handling time is greater than the predicted increase value of the handling time in the normal transition (step S167). By doing so, the message selection processing unit 311 determines whether or not a setting that the identified error message is not monitored reduces the total handling time in the normal transition. When this condition is met, the message selection processing unit 311 sets the identified error message as a monitoring-restrained message in the normal transition, and stores data of the monitoring-restrained message into the storage device such as the main memory (step S169). After that, the processing moves to step S171. On the other hand, when this condition is not met, the processing moves to the step S171.

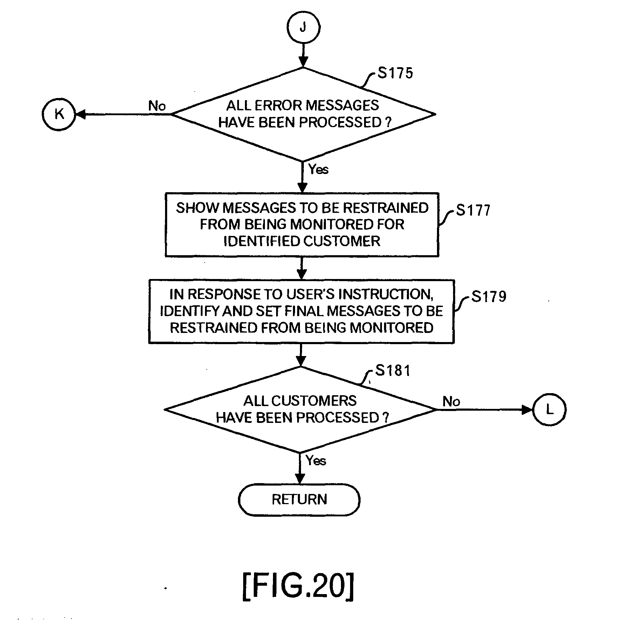

Furthermore, the message selection processing unit 311 determines whether or not the predicted decrease value of the handling time is greater than the predicted increase value of the handling time in the longest transition (stepS171). By doing this, the message selection processing unit 311 determines whether or not a setting that the identified error message is not monitored reduces the total handling time in the longest transition. When this condition is met, the message selection processing unit 311 sets the identified error message as a monitoring-restrained message in the longest transition, and stores data of the monitoring-restrained message into the storage device such as the main memory (step S173). After that, the processing moves to the processing in FIG. 20 via a terminal J. On the other hand, even when this condition is not met, the processing moves to the processing in FIG. 20 via the terminal J.

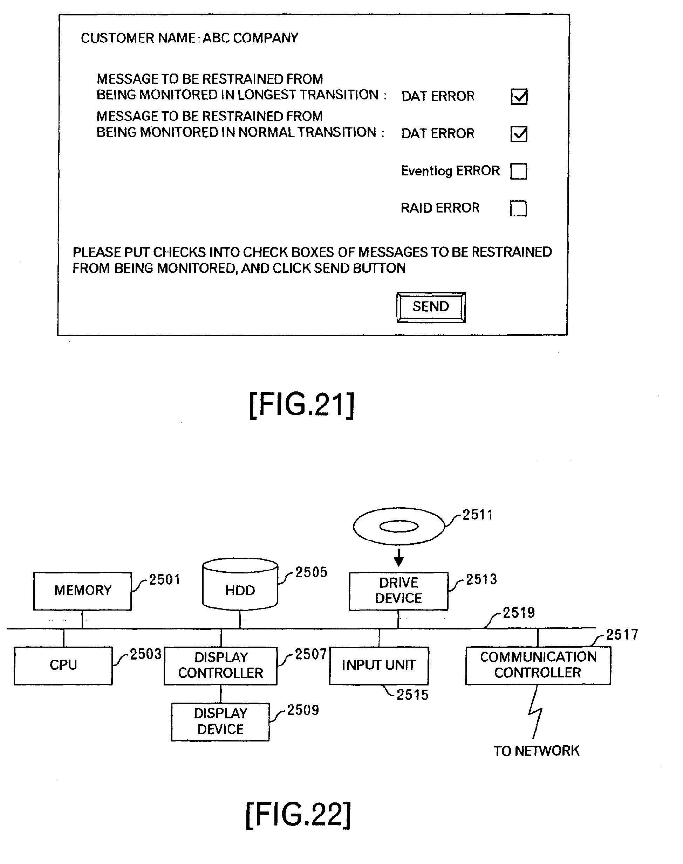

Moving to explanation of the processing in FIG. 20, the message selection processing unit 311 determines whether or not all error messages have been processed (step S175). When there is an unprocessed error message, the processing returns to the step S163 via a terminal K. However, when all error messages for the identified customer have been processed, the message selection processing unit 311 sends the monitoring-restrained messages for the identified customer to the user terminal 400 and causes the user terminal 400 to display them to the user (step S177). In the example in FIG. 12, the DAT error is identified as the monitoring-restrained message for both the normal transition and longest transition, the Eventlog error and RAID error are identified as the monitoring-restrained messages for the normal transition, and such information is shown to the user. For example, a screen as illustrated in FIG. 21 is displayed on the user terminal 400. In the example in FIG. 21, an example is given of the monitoring-restrained messages for the longest transition, and the monitoring-restrained messages for the normal transition. In this example, the check box for the DAT error, which is the monitoring-restrained message for the longest transition and the normal transition, has been checked, and the check boxes for the other monitoring-restrained messages for the normal transition are not checked. Thus, in order to more strongly prompt the user to restrain from monitoring the monitoring-restrained messages for the longest transition, the check boxes in the checked state are shown to the user. As for the monitoring-restrained message for the normal transition, the check boxes in the unchecked state are shown to the user so that the user can determine whether or not restraining from monitoring should be carried out. The user should reference the contract with the customer, and click the send button after checking the check boxes except for messages that must be monitored. Incidentally, the check box may be unchecked depending on the contract contents even for the checked monitoring-restrained messages for the longest transition. By replying with the check, it is possible to reduce the handling time and then, the possibility of the cost reduction is increased.

The user terminal 400 accepts the input from the user and sends the identifiers of the checked monitoring-restrained messages to the monitoring-restrained error message selection apparatus 300. The monitoring-restrained error message selection apparatus 300 receives the identifiers of the monitoring-restrained messages, identifies the final monitoring-restrained messages as an instruction from the user based on the identifiers of the messages, and sets these messages in the monitoring apparatus 200, for example, as the monitoring-restrained messages (step S179). Thus, the monitoring report is not sent for the monitoring-restrained messages, which were set as described above, and the report by the customer is carried out.

After that, the message selection processing unit 311 determines whether or not all customers have been processed (step S181). When there is an unprocessed customer, the processing returns to the step S161 via a terminal L. When there is no unprocessed customer, the processing returns to the calling-source processing, and the processing ends.

By carrying out the processing as described above, it becomes possible to select error messages to be set as monitoring-restrained messages and show the selected messages to the user, and further set the designated error messages as the monitoring-restrained message into the monitoring apparatus 200 after the user checked. As described above, when a setting of restraining frommonitoring is carried out for messages for which the handling time is predicted to become shorter compared with a case where the monitoring is carried out, it is possible to reduce the overall cost.

Although the embodiment of this technique was explained above, this technique is not limited to this embodiment. For example, the functional block diagram depicted in FIG. 2 is a mere example, and does not correspond to an actual program module configuration.

In addition, for example, an example was given in which the handling time for the case "no measure taken" (corresponds to the predicted decrease value) was calculated by multiplying the sum of the average process times of the included processes by the number of cases. However, it is also possible to calculate and use the total sumof the handling times for the process transitions of the case "no measure taken" after carrying out a processing such as calculating the handling time for the process transition of each case. Similarly, it is also possible to calculate and use the sum of the handling times of the process transitions for the case "not monitored", and the sum of the handling times of the process transitions for the case "measure taken", and then use the difference between these as the predicted increase value, simply. Furthermore, various calculation methods for calculating the predicted decrease value and predicted increase value can be employed.

Moreover, as for the processing flow, as long as the processing results do not change, the order of steps may be exchanged, or the steps may be executed in parallel.

In addition, the monitoring target apparatus 100, the monitoring apparatus 200, the monitoring-restrained error message selection apparatus 300 and the user terminal 400 are computer devices as shown in FIG. 22. That is, a memory 2501 (storage device), a CPU 2503 (processor), a hard disk drive (HDD) 2505, a display controller 2507 connected to a display device 2509, a drive device 2513 for a removable disk 2511, an input device 2515, and a communication controller 2517 for connection with a network are connected through a bus 2519 as shown in FIG. 22. An operating system (OS) and an application program for carrying out the foregoing processing in the embodiment are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform necessary operations. Besides, intermediate processing data is stored in the memory 2501, and if necessary, it is stored in the HDD 2505. In this embodiment of this invention, the application program to realize the aforementioned functions is stored in the computer-readable removable disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the necessary application programs systematically cooperate with each other, so that various functions as described above in details are realized.

The aforementioned embodiments are outlined as follows:

This method for selecting error messages to be restrained from being monitored, includes: first identifying, for each of error messages, a first process transition corresponding to a process transition of a case representing that an error message is monitored and no solving measure was taken, from a data storage unit storing, in association with an error message and a case, history data of processes carried out to handle the error message issued by a monitoring target apparatus, to calculate, for each of the error messages, a total sum of periods consumed for the first process transition, as a predicted decrease value of a handling time for a corresponding error message; second identifying, for each of the error messages, a second process transition relating to a process transition of a case representing that an error message was not monitored and a third process transition relating to a process transition of a case representing that an error message was monitored and a solving measure was taken, from the data storage unit, to calculate, for each of the error messages, a total sum of periods consumed for a process corresponding to a difference between the third process transition and the second process transition, as a predicted increase value of a handling time for a corresponding error message; and comparing, for each of the error messages, the predicted decrease value with the predicted increase value to select an error message for which the predicted decrease value is greater than the predicted increase value.

Thus, it becomes possible to select an error message whose monitoring is not required, based on the predicted decrease value that is a handling time expected to be decreased by not monitoring and the predicted increase value that is a handling time expected to be increased by not monitoring. Incidentally, the selection of the error message may be automatically executed or may be finally set by an administrator.

Moreover, this method may include: showing the selected error message to a user; and carrying out a setting so as to exclude the error message selected by the user from error messages to be monitored. Because an error message that should be monitored according to the maintenance contract with the customer exists, the administrator (here, user) confirms massages here.

In addition, the first identifying may include: extracting, for each of the error messages, as the first process transition, a process transition of a case, which includes a process representing that a corresponding error message is to be monitored and which does not include a process representing that a solving measure was taken, from the data storage unit; and calculating, foreachoftheerrormessages, as the predicted decrease value, a period calculated by summing, for all of cases relating to the first process transition, the periods consumed by the extracted first process transition.

Moreover, the aforementioned second identifying may include: first extracting, for each of the error messages, process transitions of a case, which includes a process representing that a corresponding error message is not to be monitored, from the data storage unit to identify the second process transition from among the extracted process transitions; second extracting, for each of the error messages, process transitions of a case, which includes a process representing that a corresponding error message is to be monitored and includes a process representing that a solving measure is taken, from the data storage unit, to identify the third process transition from among the extracted process transitions; and first calculating, for each of the error messages, as the predicted increase value, a total sum of periods consumed for a process corresponding to a difference between the third process transition and the second process transition, for the number of cases corresponding to the third process transitions.

Furthermore, the aforementioned first extracting may include: extracting, for each of the error messages, process transitions of a case, which includes a process representing that a corresponding error message is not to be monitored, from the data storage unit; and identifying, as the second process transition, a process transition whose length is longest from among the extracted process transitions. The worst case is assumed.

Moreover, the aforementioned extracting may include: extracting, for each of the error messages, process transitions of a case, which includes a process representing that a corresponding error message is not to be monitored, from the data storage unit; dividing the extracted process transitions into bigrams to count, for each of the bigrams, the number of cases relating to a corresponding bigram, and generating the second process transition by connecting the bigrams so as to include, at the forefront, the process representing that a corresponding error message is not to be monitored and include, at the last, the process representing that a solving measure is taken, and antecede the bigram whose number of cases is larger. This is one method for forming a standard process transition as the second process transition.

Furthermore, the first extracting may include: dividing the extracted process transitions into bigrams to count, for each of the bigrams, the number of cases relating to a corresponding bigram, and generating a fourth process transition by connecting the bigrams so as to include, at the forefront, the process representing that a corresponding error message is not to be monitored and include, at the last, the process representing that a solving measure is taken, and antecede the bigram whose number of cases is larger. Based on the aforementioned dividing and generating, the second identifying may include: calculating, for each of the error messages, a total sum of periods consumed for a process corresponding to a difference between the third process transition and the fourth process transition, as a second predicted increase value of a handling time for a corresponding error message. Then, the selecting may include: comparing, for each of the error messages, the predicted decrease value with the second predicted increase value to select an error message for which the predicted decrease value is greater than the second predicted increase value. By calculating two predicted increase values in this way, it becomes possible to give the reference to the user that is an administrator, for the determination of selecting.

Incidentally, the aforementioned second extracting may include: extracting an average processing time of a corresponding process from an average processing time data storage unit storing the average processing time for each of the processes to calculate the predicted increase value by the extracted average processing time and the number of corresponding cases. It is possible to calculate the predicted increase value as a model.

Moreover, the aforementioned second extracting may include: extracting, for each of the error messages, process transitions of a case, which includes the process representing that a corresponding error message is to be monitored and includes the process representing that a solving measure is taken, from the data storage unit; and dividing the extractedprocess transitions intobigrams to count, for each of the bigrams, the number of case relating to a corresponding bigram, and generating the third process transition by connecting the bigrams so as to include, at the forefront, the process representing that a corresponding error message is not to be monitored and include, at the last, the process representing that a solving measure is taken, and antecede the bigram whose number of cases is larger.

## Claims

1. A computer-implemented method for selecting error messages to be restrained from being monitored, comprising:
first identifying, for each of error messages, a first process transition corresponding to a process transition of a case representing that an error message is monitored and no solving measure was taken, from a data storage unit (301) storing, in association with an error message and a case, history data of processes carried out to handle the error message issued by a monitoring target apparatus (100), to calculate, for each of the error messages, a total sum of periods consumed for the first process transition, as a predicted decrease value of a handling time for a corresponding error message;
second identifying, for each of the error messages, a second process transition relating to a process transition of a case representing that an error message was not monitored and a third process transition relating to a process transition of a case representing that an error message was monitored and a solving measure was taken, from the data storage unit, to calculate, for each of the error messages, a total sum of periods consumed for a process corresponding to a difference between the third process transition and the second process transition, as a predicted increase value of a handling time for a corresponding error message; and
comparing, for each of the error messages, the predicted decrease value with the predicted increase value to select an error message for which the predicted decrease value is greater than the predicted increase value.

2. The computer-implemented method as set forth in claim 1, further comprising:
showing the selected error message to a user; and
carrying out a setting so as to exclude the error message selected by the user from error messages to be monitored.

3. The computer-implemented method as set forth in claim 1, wherein the first identifying comprises:
extracting, for each of the error messages, as the first process transition, a process transition of a case, which includes a process representing that a corresponding error message is to be monitored and which does not include a process representing that a solving measure was taken, from the data storage unit; and
calculating, for each of the error messages, as the predicted decrease value, a period calculated by summing, for all of cases relating to the first process transition, the periods consumed by the extracted first process transition.

4. The computer-implemented method as set forth in claim 1, wherein the second identifying comprises:
first extracting, for each of the error messages, process transitions of a case, which includes a process representing that a corresponding error message is not to be monitored, from the data storage unit to identify the second process transition from among the extracted process transitions;
second extracting, for each of the error messages, process transitions of a case, which includes a process representing that a corresponding error message is to be monitored and includes a process representing that a solving measure is taken, from the data storage unit, to identify the third process transition from among the extracted process transitions; and
first calculating, for each of the error messages, as the predicted increase value, a total sum of periods consumed for a process corresponding to a difference between the third process transition and the second process transition, for the number of cases corresponding to the third process transitions.

5. The computer-implemented method as set forth in claim 3, wherein the first extracting comprises:
extracting, for each of the error messages, process transitions of a case, which includes a process representing that a corresponding error message is not to be monitored, from the data storage unit; and
identifying, as the second process transition, a process transition whose length is longest from among the extracted process transitions.

6. The computer-implemented method as set forth in claim 3, wherein the first extracting comprises:
extracting, for each of the error messages, process transitions of a case, which includes a process representing that a corresponding error message is not to be monitored, from the data storage unit; and
dividing the extracted process transitions into bigrams to count, for each of the bigrams, the number of cases relating to a corresponding bigram, and generating the second process transition by connecting the bigrams so as to include, at the forefront, the process representing that a corresponding error message is not to be monitored and include, at the last, the process representing that a solving measure is taken, and antecede the bigram whose number of cases is larger.

7. The computer-implemented method as set forth in claim 4, wherein the first extracting further comprises:
dividing the extracted process transitions into bigrams to count, for each of the bigrams, the number of cases relating to a corresponding bigram, and generating a fourth process transition by connecting the bigrams so as to include, at the forefront, the process representing that a corresponding error message is not to be monitored and include, at the last, the process representing that a solving measure is taken, and antecede the bigram whose number of cases is larger, and
the second identifying comprises:
calculating, for each of the error messages, a total sum of periods consumed for a process corresponding to a difference between the third process transition and the fourth process transition, as a second predicted increase value of a handling time for a corresponding error message, and
the selecting comprises:
comparing, for each of the error messages, the predicted decrease value with the second predicted increase value to select an error message for which the predicted decrease value is greater than the second predicted increase value.

8. The computer-implemented method as set forth in claim 4, wherein the first calculating comprises:
extracting an average processing time of a corresponding process from an average processing time data storage unit (305) storing the average processing time for each of the processes to calculate the predicted increase value by the extracted average processing time and the number of cases corresponding to the third process transitions.

9. The computer-implemented method as set forth in claim 4, wherein the second extracting comprises:
extracting, for each of the error messages, process transitions of a case, which includes the process representing that a corresponding error message is to be monitored and includes the process representing that a solving measure is taken, from the data storage unit; and
dividing the extracted process transitions into bigrams to count, for each of the bigrams, the number of cases relating to a corresponding bigram, and generating the third process transition by connecting the bigrams so as to include, at the forefront, the process representing that a corresponding error message is not to be monitored and include, at the last, the process representing that a solving measure is taken, and antecede the bigram whose number of cases is larger.

10. A computer-readable medium storing program code for, when executed, causing a computer to perform the method of any of claims 1 to 9.

## Patentansprüche

1. Computer-implementiertes Verfahren zum Auswählen von Fehlermeldungen, die daran gehindert werden sollen, überwacht zu werden, enthaltend:
für jede von Fehlermeldungen ein erstes Identifizieren eines ersten Prozessübergangs, der einem Prozessübergang von einem Fall entspricht, der repräsentiert, dass eine Fehlermeldung überwacht wird und keine lösende Maßnahme ergriffen wurde, von einer Datenspeichereinheit (301), die in Verbindung mit einer Fehlermeldung und einem Fall die Historiendaten von Prozessen speichert, die ausgeführt wurden, um eine Fehlermeldung handzuhaben, die von einem Überwachungszielapparat (100) ausgegeben wurde, um für jede der Fehlermeldungen eine Gesamtsumme von Perioden, die für den ersten Prozessübergang verbraucht wurden, als einen prognostizierten Verminderungswert einer Handhabungszeit für eine entsprechende Fehlermeldung zu berechnen;
für jede der Fehlermeldungen ein zweites Identifizieren eines zweiten Prozessübergangs, der einem Prozessübergang von einem Fall entspricht, der repräsentiert, dass eine Fehlermeldung nicht überwacht wird, und eines dritten Prozessübergangs, der einem Prozessübergang von einem Fall entspricht, der repräsentiert, dass eine Fehlermeldung überwacht wird und eine lösende Maßnahme ergriffen wurde, von der Datenspeichereinheit, um für jede der Fehlermeldungen eine Gesamtsumme von Perioden, die für einen Prozess entsprechend einer Differenz zwischen dem dritten Prozessübergang und dem zweiten Prozessübergang verbraucht wurden, als einen prognostizierten Anhebungswert einer Handhabungszeit für eine entsprechende Fehlermeldung zu berechnen; und
ein Vergleichen des prognostizierten Verminderungswerts mit dem prognostizierten Anhebungswert für jede der Fehlermeldungen, für die der prognostizierte Verminderungswert größer als der prognostizierte Anhebungswert ist.

2. Computer-implementiertes Verfahren nach Anspruch 1, ferner enthaltend:
Anzeigen der ausgewählten Fehlermeldung für einen Anwender; und
Ausführen einer Einstellung, um die Fehlermeldung auszuschließen, die von dem Anwender von den Fehlermeldungen ausgewählt wurde, die überwacht werden sollen.

3. Computer-implementiertes Verfahren nach Anspruch 1, wobei das erste Identifizieren enthält:
für jede der Fehlermeldungen ein Extrahieren eines Prozessübergangs von einem Fall, der einen Prozess enthält, der repräsentiert, dass eine entsprechende Fehlermeldung überwacht werden soll, und der keinen Prozess enthält, der repräsentiert, dass eine lösende Maßnahme ergriffen wurde, von der Datenspeichereinheit als den ersten Prozessübergang; und
für jede der Fehlermeldungen ein Berechnen einer Periode, die durch Summieren von den Perioden, die von dem extrahierten ersten Prozessübergang verbraucht wurden, für alle von den Fällen, die den ersten Prozessübergang betreffen, als den prognostizierten Verminderungswert.

4. Computer-implementiertes Verfahren nach Anspruch 1, wobei das zweite Identifizieren enthält:
für jede der Fehlermeldungen ein erstes Extrahieren von Prozessübergängen von einem Fall, der einen Prozess enthält, der repräsentiert, dass eine entsprechende Fehlermeldung nicht überwacht werden soll, von der Datenspeichereinheit, um den zweiten Prozessübergang unter den extrahierten Prozessübergängen zu identifizieren;
für jede der Fehlermeldungen ein zweites Extrahieren von Prozessübergängen von einem Fall, der einen Prozess enthält, der repräsentiert, dass eine entsprechende Fehlermeldung überwacht werden soll, und der einen Prozess enthält, der repräsentiert, dass eine lösende Maßnahme ergriffen wurde, von der Datenspeichereinheit, um den dritten Prozessübergang unter den extrahierten Prozessübergängen zu identifizieren; und
für jede der Fehlermeldungen ein erstes Berechnen einer Gesamtsumme von Perioden, die für einen Prozess verbraucht wurden, entsprechend einer Differenz zwischen dem dritten Prozessübergang und dem zweiten Prozessübergang, für die Anzahl von Fällen, die den dritten Prozessübergängen entsprechen, als den prognostizierten Anhebungswert.

5. Computer-implementiertes Verfahren nach Anspruch 3, wobei das erste Extrahieren enthält:
für jede der Fehlermeldungen ein Extrahieren von Prozessübergängen von einem Fall, der einen Prozess enthält, der repräsentiert, dass eine entsprechende Fehlermeldung nicht überwacht werden soll, von der Datenspeichereinheit; und
ein Identifizieren eines Prozessübergangs, dessen Länge die längste unter den extrahierten Prozessübergängen ist, als den zweiten Prozessübergang.

6. Computer-implementiertes Verfahren nach Anspruch 3, wobei das erste Extrahieren enthält:
für jede der Fehlermeldungen ein Extrahieren von Prozessübergängen von einem Fall, der einen Prozess enthält, der repräsentiert, dass eine entsprechende Fehlermeldung nicht überwacht werden soll, von der Datenspeichereinheit; und
ein Dividieren der extrahierten Prozessübergänge in Bigramme, um für jedes der Bigramme die Anzahl von Fällen zu zählen, die zu einem entsprechenden Bigramm gehören, und ein Erzeugen des zweiten Prozessübergangs durch Verbinden der Bigramme, so dass sie an der Vorderfront den Prozess enthalten, der repräsentiert, dass eine entsprechende Fehlermeldung nicht überwacht werden soll, und am Ende den Prozess enthalten, der repräsentiert, dass eine lösende Maßnahme ergriffen wurde, und das Bigramm voranstellen, dessen Anzahl von Fällen größer ist.

7. Computer-implementiertes Verfahren nach Anspruch 4, wobei das erste Extrahieren ferner enthält:
ein Dividieren der extrahierten Prozessübergänge in Bigramme, um für jedes der Bigramme die Anzahl von Fällen zu zählen, die zu einem entsprechenden Bigramm gehören, und ein Erzeugen eines vierten Prozessübergangs durch Verbinden der Bigramme, so dass sie an der Vorderfront den Prozess enthalten, der repräsentiert, dass eine entsprechende Fehlermeldung nicht überwacht werden soll, und am Ende den Prozess enthalten, der repräsentiert, dass eine lösende Maßnahme ergriffen wurde, und das Bigramm voranstellen, dessen Anzahl von Fällen größer ist, und
wobei das zweite Identifizieren enthält:
für jede der Fehlermeldungen ein Berechnen einer Gesamtsumme von Perioden, die für einen Prozess verbraucht wurden, entsprechend einer Differenz zwischen dem dritten Prozessübergang und dem vierten Prozessübergang, als einen zweiten prognostizierten Anhebungswert einer Handhabungszeit für eine entsprechende Fehlermeldung, und
wobei das Auswählen enthält:
für jede der Fehlermeldungen ein Vergleichen des prognostizierten Verminderungswerts mit dem zweiten prognostizierten Anhebungswert, um eine Fehlermeldung auszuwählen, für die der prognostizierte Verminderungswert größer als der zweite prognostizierte Anhebungswert ist.

8. Computer-implementiertes Verfahren nach Anspruch 4, wobei das erste Berechnen enthält:
ein Extrahieren einer durchschnittlichen Verarbeitungszeit eines entsprechenden Prozesses von einer Durchschnittsverarbeitungszeit-Datenspeichereinheit (305), die die durchschnittliche Verarbeitungszeit für jeden der Prozesse speichert, um den prognostizierten Anhebungswert durch die extrahierte durchschnittliche Verarbeitungszeit und die Anzahl von Fällen zu berechnen, die den dritten Prozessübergängen entsprechen.

9. Computer-implementiertes Verfahren nach Anspruch 4, wobei das zweite Extrahieren enthält:
für jede der Fehlermeldungen ein Extrahieren von Prozessübergängen von einem Fall, der den Prozess enthält, der repräsentiert, dass eine entsprechende Fehlermeldung überwacht werden soll, und den Prozess enthält, der repräsentiert, dass eine lösende Maßnahme ergriffen wurde, von der Datenspeichereinheit; und
ein Dividieren der extrahierten Prozessübergänge in Bigramme, um für jedes der Bigramme die Anzahl von Fällen zu zählen, die zu einem entsprechenden Bigramm gehören, und ein Erzeugen des dritten Prozessübergangs durch Verbinden der Bigramme, so dass sie an der Vorderfront den Prozess enthalten, der repräsentiert, dass eine entsprechende Fehlermeldung nicht überwacht werden soll, und am Ende den Prozess enthalten, der repräsentiert, dass eine lösende Maßnahme ergriffen wurde, und das Bigramm voranstellen, dessen Anzahl von Fällen größer ist.

10. Computer-lesbares Medium, das einen Programm-Code speichert, der, wenn er ausgeführt wird, einen Computer veranlasst, das Verfahren nach einem der Ansprüche 1 bis 9 auszuführen.

## Revendications

1. Procédé mis en oeuvre par ordinateur pour sélectionner des messages d'erreur devant être empêchés d'être surveillés, comportant :
une première identification, pour chacun des messages d'erreur, d'une première transition de processus correspondant à une transition de processus d'un cas montrant qu'un message d'erreur est surveillé et qu'aucune mesure de résolution n'a été prise, à partir d'une unité de stockage de données (301) mémorisant, en association avec un message d'erreur et d'un cas, des données d'historique des processus mis en oeuvre pour traiter le message d'erreur émis par un appareil de surveillance cible (100), pour calculer, pour chacun des messages d'erreur, une somme totale de périodes consommées pour la première transition de processus, en tant que valeur de diminution prédite d'un temps de traitement pour un message d'erreur correspondant ;
une seconde identification, pour chacun des messages d'erreur, d'une seconde transition de processus ayant trait à une transition d'un processus d'un cas montrant qu'un message d'erreur n'était pas surveillé et qu'une troisième transition de processus ayant trait à une transition de processus d'un cas montrant qu'un message d'erreur est surveillé et qu'une mesure de résolution a été prise, à partir de l'unité de stockage de données, pour calculer, pour chacun des messages d'erreur, une somme totale des périodes consommées pour un processus correspondant à une différence entre la troisième transition de processus et la seconde transition de processus, en tant que valeur d'augmentation prédite d'un temps de traitement pour un message d'erreur correspondant ; et
la comparaison, pour chacun des messages d'erreur, de la valeur de diminution prédite à la valeur d'augmentation prédite pour sélectionner un message d'erreur pour lequel la valeur de diminution prédite est supérieure à la valeur d'augmentation prédite.

2. Procédé mis en oeuvre sur un ordinateur selon la revendication 1, comportant en outre :
la présentation du message d'erreur sélectionnée à un utilisateur ; et
la mise en oeuvre d'un réglage de manière à exclure le message d'erreur sélectionné par l'utilisateur des messages d'erreur à surveiller.

3. Procédé mis en oeuvre sur un ordinateur selon la revendication 1, dans lequel la première identification comporte :
l'extraction, pour chacun des messages d'erreur, en tant que première transition de processus, d'une transition de processus d'un cas, qui comprend un processus montrant qu'un message d'erreur correspondant doit être surveillé et qu'il ne doit pas inclure de processus montrant qu'une mesure de résolution a été prise, à partir de l'unité de stockage de données ; et
le calcul, pour chacun des messages d'erreur, en tant que valeur de diminution prédite, d'une période calculée en additionnant, pour tous les cas ayant trait à la première transition de processus, des périodes consommées par la première transition de processus extraite.

4. Procédé mis en oeuvre sur un ordinateur selon la revendication 1, dans lequel la seconde identification comporte :
une première extraction, pour chacun des messages d'erreur, des transitions de processus d'un cas, qui comprend un processus montrant qu'un message d'erreur correspondant ne doit pas être surveillé, à partir de l'unité de stockage de données pour identifier la seconde transition de processus parmi les transitions de processus extraites ;
une seconde extraction, pour chacun des messages d'erreurs, des transitions de processus d'un cas, qui comprend un processus montrant qu'un message d'erreur correspondant doit être surveillé et comprend un processus montrant qu'une mesure de résolution est prise, à partir de l'unité de stockage de données, pour identifier la troisième transition de processus parmi les transitions de processus extraites ; et
un premier calcul, pour chacun des messages d'erreur, en tant que valeur d'augmentation prédite, d'une somme totale de périodes consommées pour un processus correspondant à une différence entre la troisième transition de processus et la seconde transition de processus, pour le nombre de cas correspondant à la troisième transition de processus.

5. Procédé mis en oeuvre sur un ordinateur selon la revendication 3, dans lequel la première extraction comporte:
l'extraction, pour chacun des messages d'erreur, de transitions de processus d'un cas, qui comprend un processus montrant qu'un message d'erreur correspondant ne doit pas être surveillé, à partir de l'unité de stockage de données ; et
l'identification, en tant que seconde transition de processus, d'une transition de processus dont la longueur est la plus longue parmi les transitions de processus extraites.

6. Procédé mis en oeuvre sur un ordinateur selon la revendication 3, dans lequel la première extraction comporte:
l'extraction, pour chacun des messages d'erreur, de transition de processus d'un cas, qui comprend un processus montrant qu'un message d'erreur ne doit pas être surveillé, à partir de l'unité de stockage de données ; et
la division des transitions de processus extraites en bigrammes pour compter, pour chacun des bigrammes, le nombre de cas ayant trait à un bigramme correspondant, et générer la seconde transition de processus en reliant les bigrammes de manière à inclure, au début, le processus montrant qu'un message d'erreur correspondant ne doit pas être surveillé et à inclure, à la fin, le processus montrant une mesure de résolution est prise, et à précéder le bigramme dont le nombre de cas est le plus grand.

7. Procédé mis en oeuvre sur un ordinateur selon la revendication 4, dans lequel la première extraction comporte en outre :
la division des transitions de processus extraites en bigrammes pour compter, pour chacun des bigrammes, le nombre de cas ayant trait à un bigramme correspondant, et générer une quatrième transition de processus en reliant les bigrammes de manière à inclure, au début, le processus montrant qu'un message d'erreur correspondant ne doit pas être surveillé et à inclure, à la fin, le processus montrant qu'aucune mesure de résolution n'est prise, et à précéder le bigramme dont le nombre de cas est le plus grand, et
la seconde identification comporte :
le calcul, pour chacun des messages d'erreur, d'une somme totale des périodes consommées pour un processus correspondant à une différence entre la troisième transition de processus et la quatrième transition de processus, en tant que seconde valeur d'augmentation prédite d'un temps de traitement pour un message d'erreur correspondant, et
la sélection comporte :
la comparaison, pour chacun des messages d'erreur, de la valeur de diminution prédite à la seconde valeur d'augmentation prédite pour sélectionner un message d'erreur pour lequel la valeur de diminution prédite est supérieure à la seconde valeur d'augmentation prédite.

8. Procédé mis en oeuvre sur un ordinateur selon la revendication 4, dans lequel le premier calcul comporte :
l'extraction d'un temps de traitement moyen d'un processus correspondant à partir d'une unité de stockage de données de temps de traitement moyen (305) mémorisant le temps de traitement moyen pour chacun des processus afin de calculer la valeur d'augmentation prédite par le temps de traitement moyen extrait et le nombre de cas correspondant à la troisième transition de processus.

9. Procédé mis en oeuvre sur un ordinateur selon la revendication 4, dans lequel la seconde extraction comporte:
l'extraction, pour chacun des messages d'erreur, des transitions de processus d'un cas, qui comprend le processus montrant qu'un message d'erreur correspondant doit être surveillé et comprend le processus montrant qu'une mesure de résolution est prise, à partir de l'unité de stockage de données ; et
la division des transitions de processus extraites en bigrammes pour compter, pour chacun des bigrammes, le nombre de cas ayant trait à un bigramme correspondant, et générer la troisième transition de processus en reliant les bigrammes de manière à inclure, au début, le processus montrant qu'un message d'erreur correspondant ne doit pas être surveillé et à inclure, à la fin, le processus montrant qu'une mesure de résolution est prise, et à précéder le bigramme dont le nombre de cas est le plus grand.

10. Support pouvant être lu par un ordinateur mémorisant un code de programme pour, lorsqu'il est exécuté, amener un ordinateur à effectuer le procédé selon l'une quelconque des revendications 1 à 9.
